# FASCICULE DE BREVET EUROPEEN

(11) **EP 4 480 800 B1**
(45) Date de publication et mention de la délivrance du brevet: **26.11.2025**
(21) Numéro de dépôt: 24183531.3
(22) Date de dépôt: 20.06.2024
(51) Int. Cl.: B62K 13/08, B62K 5/06, B62K 5/027, B62M 27/02, B62M 29/00, B62D 21/18, B62D 55/02, B62D 55/04, B62D 61/08, B62K 5/00, B62D 21/11

(54) **KART DE TYPE TRIKE ET KIT DE MOTORISATION POUR UN TEL KART**
TRIKE-KART UND MOTORISIERUNGSKIT FÜR EIN SOLCHES KART
KART OF THE TRIKE TYPE AND MOTORISATION KIT FOR SUCH A KART

(30) Priorité: 22.06.2023 FR 2306465
(43) Date de publication de la demande: 25.12.2024
(73) Titulaire: Steimer, Jean-Marie, 67600 Mussig (FR)
(72) Inventeur: Steimer, Jean-Marie, 67600 Mussig (FR)
(74) Mandataire: Rhein, Alain

(56) Documents cités:
- CN-U- 215 155 282
- DE-A1- 102008 034 843
- FR-A1- 3 095 635
- JP-A- S60 143 189
- US-A- 4 706 769
- US-A1- 2018 154 961
- US-B1- 10 328 990

## Description

La présente invention concerne un kit de motorisation pour un kart à trois roues, de type trike, ainsi qu'un tel kart équipé de ce kit de motorisation.

De manière similaire à la pratique de la luge, il est connu, notamment par le document US 2018/0154961 l'usage des karts de descente pour dévaler les pentes enneigées ou en l'absence de neige.

Ces karts sont de configuration très simple et comportent un châssis sous forme de cadre essentiellement défini par deux longerons tubulaires reliés à leur extrémité arrière par une traverse. Dans cette partie arrière, ce cadre repose sur un essieu transversal rigide dont les extrémités s'étendent de part et d'autre de ce châssis et sur lesquelles sont montées des roues. Dans leur partie avant, les deux longerons tubulaires se rejoignent à hauteur d'un tube de direction traversé d'un tube d'une fourche recevant une roue directrice. Son orientation est assurée au moyen d'un guidon monté sur l'extrémité du tube de fourche et équipé de poignées, ainsi que de commandes de freins. Sur le châssis repose un siège pour le pilote, lequel dispose encore de repose-pieds au niveau de la fourche.

Comme pour la pratique des sports d'hiver, il est très souvent fait usage des remontées mécaniques pour accéder au sommet des pentes à dévaler. Grâce à l'essor des motorisations électriques sans émission, il est également connu des karts motorisés, sous forme d'une propulsion de l'essieu arrière ou d'une traction au travers de la roue avant pourvue d'un moyeu à moteur électrique.

Dans le cas d'une propulsion arrière, l'essieu prend la forme d'un arbre d'entrainement sur lequel repose le châssis au moyen de paliers, sur cet arbre agissant le moteur par l'intermédiaire de moyens d'entrainement adaptés.

Si la solution d'une motorisation par traction n'est guère adaptée pour une progression sur la neige en raison de la faible adhérence que procure la seule roue avant sur ce type de terrain, une motorisation sur les roues arrière n'est guère plus performante pour gravir des pentes enneigées.

A noter que l'on connait encore, par le document US 4 706 769 un kit de transmission à chenille adaptable à une moto à trois roues, de type trike, comprenant une roue avant et deux roues arrière. A l'arrière de ce trike peut être attelé un essieu auxiliaire portant également à ses extrémités des roues. Autour de ces dernières et des roues arrière du trike sont enroulées des chenilles. En somme, dans ce cas, les roues arrière du trike jouent le rôle de barbotins.

Le document US10328990B1 divulgue un kit de motorisation pour kart de type trike, le kit de motorisation comportant un châssis auxiliaire pourvu de moyens pour sa fixation sur la partie arrière du kart, le châssis auxiliaire reposant au travers de paliers sur un essieu sous forme d'un arbre d'entraînement dont les extrémités sont conçues pour recevoir des roues, sur ce châssis auxiliaire reposant par des moyens de fixation adaptés un moteur relié audit arbre d'entraînement par des moyens de transmission.

C'est dans le cadre d'une démarche inventive qu'il a été imaginé un kit de motorisation pour kart, de type trike, ce kit comportant un châssis qui lui est propre reposant sur un essieu sous forme d'un arbre d'entraînement dont les extrémités sont conçues pour recevoir, dans une première alternative, des roues ou, dans une seconde alternative, des barbotins pour l'entrainement de chenilles. Le châssis de ce kit de motorisation comporte par ailleurs des moyens pour sa fixation sur la partie arrière du châssis du kart.

Ainsi, l'invention concerne un kit de motorisation pour kart, de type trike, comportant un châssis en forme de cadre comprenant deux longerons reliés par une traverse au niveau de leur extrémité arrière, ces longerons rejoignant, dans la partie avant du châssis, un tube de direction traversé par un tube de fourche dont l'extrémité inférieure est solidaire d'une fourche recevant une roue directrice, sur l'extrémité supérieure du tube de fourche étant monté un guidon, le châssis reposant, dans sa partie arrière, sur un essieu fixe, le kit de motorisation comportant un châssis auxiliaire pourvu de moyens pour sa fixation sur la partie arrière du kart, le châssis auxiliaire reposant au travers de paliers sur un essieu sous forme d'un arbre d'entraînement dont les extrémités sont conçues pour recevoir, selon le cas, des roues ou des barbotins, sur le châssis auxiliaire reposant par des moyens de fixation adaptés un moteur relié audit arbre d'entraînement par des moyens de transmission caractérisé en ce que les moyens de fixation sont définis par au moins une pièce de jonction conçue pour enserrer, simultanément, l'essieu fixe du kart, la traverse, reliant à leur extrémité arrière les longerons du châssis de ce kart, et une traverse avant du châssis auxiliaire du kit de motorisation.

L'invention concerne également un kart, de type trike, équipé d'un tel kit de motorisation et comportant un châssis en forme de cadre comprenant deux longerons reliés par une traverse au niveau de leur extrémité arrière, ces longerons rejoignant, dans la partie avant du châssis, un tube de direction traversé par un tube de fourche dont l'extrémité inférieure est solidaire d'une fourche recevant une roue directrice, sur l'extrémité supérieure du tube de fourche étant monté un guidon, le châssis du kart reposant, dans sa partie arrière, sur un essieu fixe comportant des parties d'extrémité d'axe s'étendant de part et d'autre du châssis du kart, sur les extrémités de l'essieu sous forme d'un arbre d'entraînement de ce kit de motorisation étant montées des roues.

L'invention concerne également un kart, de type trike, équipé d'un tel kit de motorisation et comportant un châssis en forme de cadre comprenant deux longerons reliés par une traverse au niveau de leur extrémité arrière, ces longerons rejoignant, dans la partie avant du châssis, un tube de direction traversé par un tube de fourche dont l'extrémité inférieure est solidaire d'une fourche recevant une roue directrice, sur l'extrémité supérieure du tube de fourche étant monté un guidon, le châssis du kart reposant, dans sa partie arrière, sur un essieu fixe comportant des parties d'extrémité d'axe s'étendant de part et d'autre du châssis du kart, sur les extrémités de l'essieu sous forme d'un arbre d'entraînement de ce kit de motorisation étant montées des barbotins, sur les parties d'extrémité d'axe de l'essieu fixe étant montés des rouleaux de renvoi, sur chaque couple, rouleau de renvoi - barbotin, de part et d'autre du châssis, étant monté une chenille en venant s'enrouler partiellement autour du rouleau de renvoi et du barbotin dudit couple.

Une telle configuration permet aisément, de monter sur l'arbre d'entrainement du kit de motorisation, selon le cas des roues ou des barbotins pour l'entrainement de chenilles s'enroulant partiellement autour, d'une part, de ces barbotins et, d'autre part, des rouleaux de renvoi préalablement montés sur lesdits parties d'extrémité d'axe du kart.

Les avantages découlant de la présente invention consistent en ce qu'un kart, de type trike, comportant des moyens motorisés de propulsion sur les roues arrière, est susceptible d'être équipé, en lieu et place de sa ou ses roues arrière motrices, de chenilles d'entraînement, permettant à ce kart d'évoluer avec une parfaite adhérence autant sur neige que tout autre type de terrain.

Le kit de motorisation permet non seulement d'associer aisément une motorisation à un kart de type trike qui n'en comportait pas tout en rendant ce kart modulable pour un usage sur neige grâce à des chenilles ou sur tout autre type de terrain en substituant aux chenilles des roues.

L'invention sera mieux comprise à la lecture de la description qui va suivre se rapportant à des exemples de réalisation représentés dans les dessins en annexe dans lesquels :
[Fig.1] la figure 1 représente en plan et de manière schématisée d'un kart, de type trike, de configuration classique sans motorisation ;
[Fig.2] la figure 2 est une représentation similaire à la figure 1 illustrant en plan et de manière schématisée un kart de type strike avec une motorisation ;
[Fig. 3] la figure 3 est une représentation similaire aux figures 1 illustrant en plan et de manière schématisée un kart de type strike avec kit de motorisation, selon l'invention ;
[Fig. 4] la figure 4 est une représentation schématisée, partielle et en coupe illustrant la pièce de jonction définissant les moyens de fixation reliant un kit de motorisation à la partie arrière du châssis d'un kart conforme à l'invention ;
[Fig. 5] la figure 5 représente en perspective cette pièce de jonction ;
[Fig. 6] la figure 6 représente de manière schématisée, partielle et vue de côté de la liaison du kit de motorisation sur la partie arrière du kart ;
[Fig. 7] est une représentation en perspective d'un kart selon l'invention avec roues
[Fig. 8] est une représentation en perspective d'un kart selon l'invention avec chenilles.

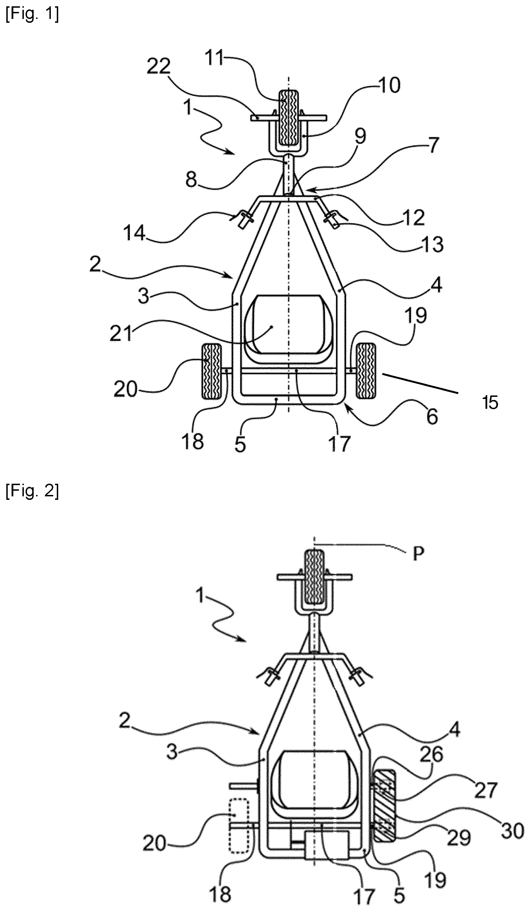

La figure 1 des dessins en annexe illustre, de manière schématisée, un kart 1, de type trike, de configuration classique sans motorisation, selon l'état la technique.

Ce kart 1 comporte un châssis 2 en forme de cadre comprenant deux longerons 3, 4 reliés par une traverse 5 au niveau de leur extrémité arrière 6. Dans la partie avant 7 de ce châssis 2, les longerons 3, 4 se rejoignent à hauteur d'un tube de direction 8. Celui-ci est traversé par un tube de fourche 9 dont extrémité inférieure est solidaire d'une fourche 10 recevant une roue directrice 11. L'orientation de cette roue directrice 11 est assurée au moyen d'un guidon 12 monté sur l'extrémité supérieure du tube de fourche 9, guidon 12 recevant des poignées 13 à ses extrémités, ainsi que des moyens de commande, notamment de freins 14.

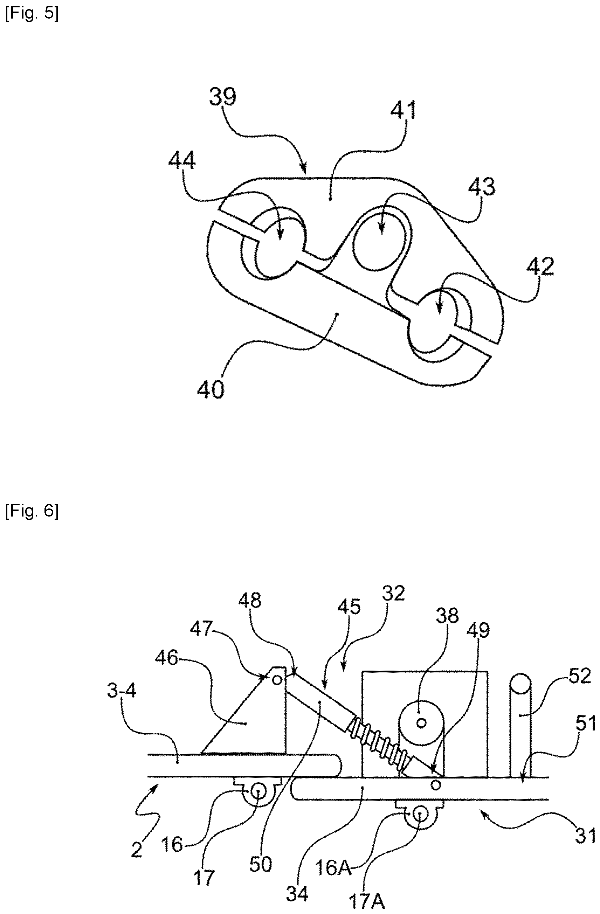

Dans sa partie arrière 15, le châssis 2 repose, au moyen de paliers 16 (visible sur la figure 6), sur un essieu fixe 17 comportant des parties d'extrémité d'axe 18, 19, s'étendant de part et d'autre du châssis 2 et définissant des tronçons d'axe sur chacun desquels peut être montée une roue 20 ou un rouleau de renvoi 27 comme cela sera expliqué plus en avant dans la description.

Pour accueillir un passager, sur ce châssis 2 est fixé un siège 21, tandis que des reposes pieds 22 peuvent être ménagés de part et d'autre de la fourche 10, sensiblement à hauteur de l'axe de la roue directrice 11.

Un tel Kart 1 de type trike comporte des moyens de freinage (non représentés). Ceux-ci sont généralement associés à au moins une des roues, laquelle comporte un moyen portant un disque de frein sur lequel agissent les mâchoires d'un étrier de frein rendu solidaire d'une partie fixe du châssis 2.

La figure 2 est une représentation similaire à la figure 1 représentant un kart 1 de type trike motorisé. À noter qu'une référence identique sur les figures désigne une même pièce ou des moyens identiques ou similaires.

Ainsi, le kart 1 comporte en tant qu'essieu fixe 17, un arbre d'entraînement sur lequel agit, par l'intermédiaire de moyens de transmission adaptés 23, un moteur 24, de préférence électrique, fixé sur la partie arrière 15 du châssis 2. De manière non visible sur les figures, sur ce châssis 2 peuvent également être montées la ou les batteries d'alimentation d'un tel moteur électrique 24, tout comme l'usager peut accéder, au niveau du guidon 12, à des moyens de commande de ce moteur 24, notamment d'accélération.

Sur le châssis 2 du kart 1, en avant de l'essieu fixe 17 en direction de la roue directrice 11, sont montés, parallèlement aux parties d'extrémité d'axe 18, 19 s'étendant de part d'autre de ce châssis 2 dudit essieu fixe 17, des tronçons d'axe 25, 26 pour la réception, de manière libre en rotation, d'un rouleau de renvoi 27.

Préférentiellement, ces tronçons d'axe 25, 26 sont montés, respectivement, de part et d'autre du châssis 2 dans un même alignement axial. En somme, sur chacun des longerons 3 ; 4 du châssis 2 est rapporté, sensiblement horizontalement et en s'écartant du plan médian vertical P du kart 1, un tronçon d'axe 25 ; 26. Par ailleurs, chacun d'eux se situe dans un alignement longitudinal 28 d'une partie d'extrémité d'axe, respectivement, 18 ; 19 de l'arbre d'entraînement correspondance à l'essieu fixe 17, de sorte qu'un barbotin 29 monté sur une partie d'extrémité d'axe 18, respectivement 19 de l'arbre d'entrainement et un rouleau de renvoi 27 monté sur un tronçon d'axe 25, respectivement 26, se situent dans un même alignement parallèle au plan médian vertical P du kart 1.

Grâce à cette configuration, aux roues 20 initialement montées sur les parties d'extrémité d'axe 18, 19 de l'arbre d'entraînement défini par l'essieu fixe 17, peuvent être substitués des barbotins 29 (ou poulies d'entrainement), tandis que sur les tronçons d'axe 25, 26 sont montés les rouleaux de renvoi 27, de sorte que sur chaque couple, rouleau de renvoi 27 - barbotin 29, de part et d'autre du châssis 2, peut-être montée une chenille 30, en venant s'enrouler partiellement autour de ce rouleau de renvoi 27 et de ce barbotin 29. Cette chenille 30, s'étendant dans un plan parallèlement au plan médian P du kart 1, est préférentiellement en caoutchouc ou en un matériau synthétique aux caractéristiques similaires.

Grâce à la configuration, un kart à roues 20 motorisé, peut être transformé, très aisément, en un kart à chenilles pour un usage sur pentes enneigées, par exemple.

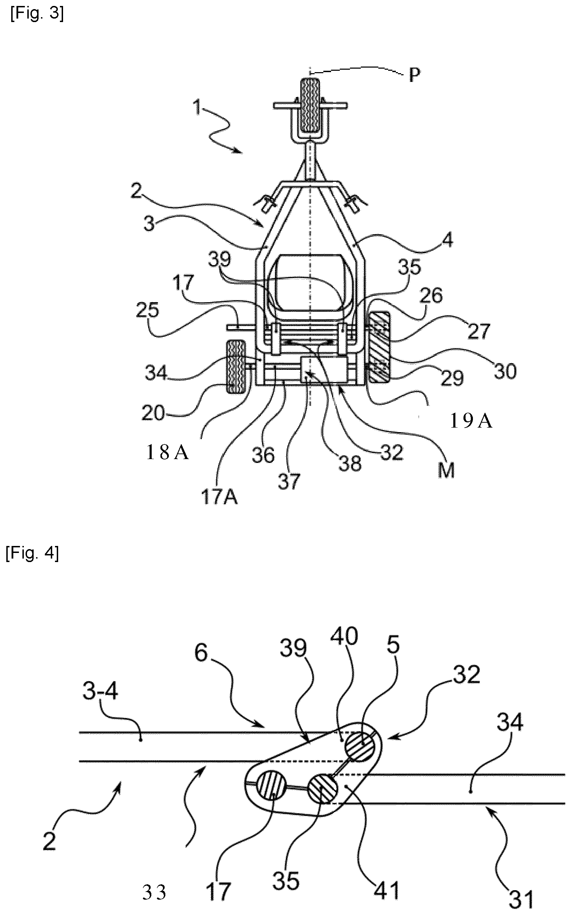

Selon le mode de réalisation conforme à l'invention et représenté dans les figures 3 à 8, les tronçons d'axe sont définis par les parties d'extrémités 18, 19 de l'essieu fixe 17 d'un kart 1 initialement sans motorisation. Par ailleurs, il est conçu un kit de motorisation M comportant un châssis auxiliaire 31 pourvu de moyens de fixation 32 sur la partie arrière 33 du kart 1. Plus particulièrement, ces moyens de fixation 32 du châssis auxiliaire 31 sont conçus fixer le kit de motorisation M sur la traverse 5 reliant au niveau de leur extrémité arrière 6 les deux longerons 3, 4 du kart 1. Ce châssis auxiliaire 31 repose au travers de paliers 16A sur un essieu sous forme d'un arbre d'entraînement 17A dont les extrémités 18A, 19A peuvent recevoir, selon le cas, des roues 20 ou des barbotins 29.

Selon un mode de réalisation avantageux, le châssis auxiliaire 31 comporte deux longerons latéraux 34, une traverse avant 35 et, de manière optionnelle, une traverse arrière 36.

Sur ce châssis auxiliaire 31 repose, par l'intermédiaire de moyens de fixation adaptés (non représenté), un moteur 37, préférentiellement de type électrique sachant que la présente invention n'est nullement limitée à ce type de moteur. Des moyens de transmission 38 reliant ce moteur 37 à l'arbre d'entraînement 17A sont conçus pour assurer l'entraînement en rotation de ce dernier par l'intermédiaire de ce moteur 37.

Sur ce châssis auxiliaire 31 peut également être montée au moins une batterie d'alimentation d'un moteur 37 de type électrique, tout comme une unité de gestion de fonctionnement de ce dernier.

Comme il ressort de la description qui précède, le kit de motorisation M, selon l'invention, est conçu pour être rapporté, grâce aux moyens de fixation 32 sur la partie arrière 33 d'un kart 1 non motorisé.

À propos des moyens de fixation 32, ceux-ci peuvent prendre différentes formes de réalisation. Toutefois, selon l'invention, comme visible dans les figures 4 et 5, ils sont définis par au moins une pièce de jonction 39, préférentiellement plusieurs, conçues pour enserrer, simultanément, l'essieu fixe 17 d'un kart 1 non motorisé, la traverse 5, reliant à leur extrémité arrière 6 les longerons 3 et 4 du châssis 2 de ce kart 1, et la traverse avant 35 du châssis auxiliaire 31 du kit de motorisation M.

Comme visible dans la figure 5, une telle pièce de jonction 39 est composée de deux mâchoires 40, 41 comportant chacune des logements 42, 43, 44 conçus pour enserrer, respectivement l'essieu fixe 17, la traverse 5 et la traverse avant 35. Ces deux mâchoires 40, 41 sont susceptibles d'être resserrés l'une sur l'autre grâce à des moyens de serrage connu de l'homme du métier, tels que vis ou autre, non représentés sur les figures.

Les moyens de fixation 32 peuvent être complétés par au moins un bras de liaison 45 reliant au moins un longeron latéral 34 du châssis auxiliaire 31 au châssis 2 du kart 1. Préférentiellement, deux bras de liaison 45 relient de part et d'autre le châssis auxiliaire 31 au châssis 2 du kart 1.

Selon un mode de réalisation avantageux, à proximité de leur extrémité arrière 6 les longerons 4 du châssis 2 sont surmontés d'un gousset 46, préférentiellement métallique mais qui pourrait également être en matériau synthétique. Ces goussets 46 comportent une extrémité supérieure 47 dont est rendu solidaire une première extrémité 48 d'un bras de liaison 45, dont l'autre extrémité 49 vient se fixer sur l'un des longerons latéraux 34 du châssis auxiliaire 31.

Selon un mode de réalisation préférée, les bras de liaison 45 sont définis par des amortisseurs à ressort 50 qui ont pour avantage de procurer un confort d'usage amélioré d'un tel kart 1 équiper d'un kit de motorisation M selon invention.

Par ailleurs, sur l'extrémité arrière 51, opposée à la traverse avant 35 des longerons latéraux 34 du châssis auxiliaire 31 est préférentiellement montée une barre de pare-chocs 52

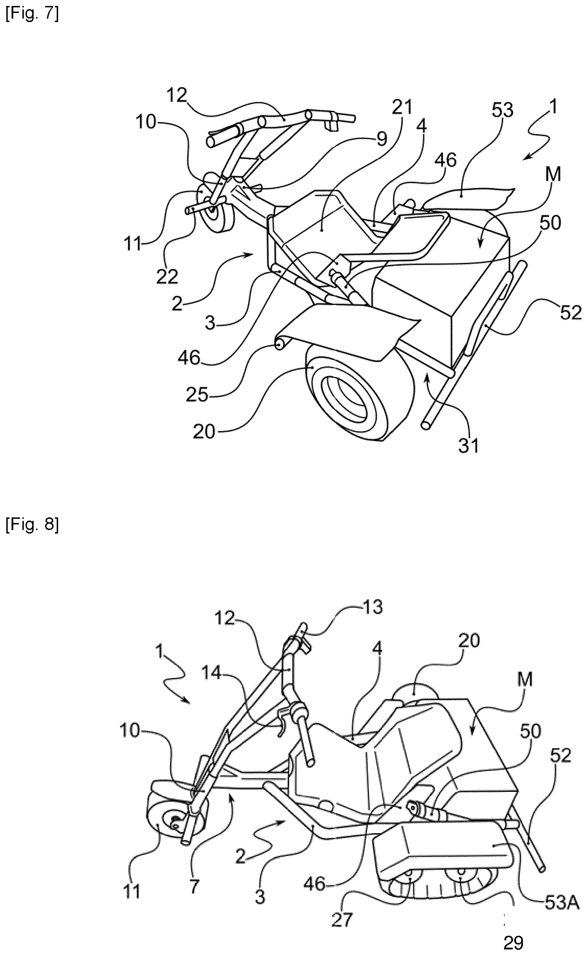

Comme visible sur les figures 7 et 8, au-dessus, selon le cas, des roues 20 ou des chenilles 30 peuvent s'étendre des garde-boue 53, 53A. À noter, à ce sujet, que dans la configuration d'un kart 1 avec kit de motorisation à roues 20, les garde-boue 53 sont susceptibles d'être fixés au moins en partie et de manière démontable sur les parties d'extrémité d'axe 18, 19 de l'essieu fixe 17. Dans une configuration à chenilles, ces garde-boue 53A son préférentiellement fixés sur le châssis auxiliaire 31 grâce à des moyens de fixation adaptés, non visible sur les figures.

En somme, l'invention, en dehors d'un kit de motorisation pour kart de type trike, concerne également un kart 1, équipé d'un tel kit de motorisation M et comportant un châssis 2 en forme de cadre comprenant deux longerons 3, 4 reliés par une traverse 5 au niveau de leur extrémité arrière 6, ces longerons 3, 4 rejoignant, dans la partie avant 7 du châssis 2, un tube de direction 8 traversé par un tube de fourche 9 dont l'extrémité inférieure est solidaire d'une fourche 10 recevant une roue directrice 11, sur l'extrémité supérieure du tube de fourche 9 étant monté un guidon 12, le châssis 2 reposant, dans sa partie arrière 15, sur un essieu fixe 17 comportant des parties d'extrémité d'axe 18, 19 s'étendant de part et d'autre du châssis 2 du kart 1, tandis que sur les extrémités 18A, 19A de l'essieu sous forme d'un arbre d'entraînement 17A du kit de motorisation M sont montées des roues 20.

De plus l'invention concerne un kart 1 identique, à savoir équipé d'un kit de motorisation M et comportant un châssis 2 en forme de cadre comprenant deux longerons 3, 4 reliés par une traverse 5 au niveau de leur extrémité arrière 6, ces longerons 3, 4 rejoignant, dans la partie avant 7 du châssis 2, un tube de direction 8 traversé par un tube de fourche 9 dont l'extrémité inférieure est solidaire d'une fourche 10 recevant une roue directrice 11, sur l'extrémité supérieure du tube de fourche 9 étant monté un guidon 12, le châssis 2 reposant, dans sa partie arrière 15, sur un essieu fixe 17 comportant des parties d'extrémité d'axe 18, 19 s'étendant de part et d'autre du châssis 2 du kart 1, tandis que sur les extrémités 18A, 19A de l'essieu sous forme d'un arbre d'entraînement 17A du kit de motorisation M sont montées des barbotins 29, sur les parties d'extrémités d'axe 18, 19 de l'essieu fixe 17 de part et d'autre du châssis 2 sont montés des rouleaux de renvoi 27, sur chaque couple, rouleau de renvoi 27 - barbotin 29, de part et d'autre du châssis 2, étant monté une chenille 30 en venant s'enrouler partiellement autour d'un rouleau de renvoi 27 et d'un barbotin 29.

Un tel Kart 1 de type trike, selon l'invention, comporte également des moyens de freinage (non représentés). Ceux-ci peuvent être associés à l'arbre d'entrainement définissant l'essieu 17A du kit de motorisation. Ainsi, ces moyens de freinage peuvent comporter un disque de frein monté solidaire en rotation sur cet arbre d'entrainement 17A et sur lequel agissent les mâchoires d'un étrier de frein rendu solidaire d'une partie fixe du châssis auxiliaire 31. L'action de freinage est alors répercutée, selon le cas, sur au moins une roue 20 dans une configuration du kart 1 à roues ou sur au moins un barbotin 29 dans une configuration à chenilles 30. Il est également possible d'imaginer une conception différente dans l'un et l'autre cas. Ainsi, dans une configuration à chenilles, le ou les rouleaux de renvoi 27 peuvent comporter un moyeu à disque sur lequel agissent les mâchoires d'un étrier de frein rendu solidaire d'une partie fixe du châssis 2, tandis que dans une configuration à roues ces moyens de freinage sont prévus pour agir sur l'arbre d'entrainement 17A comme décrit plus haut.

Les avantages découlant de la présente invention consistent, de manière essentielle, en ce qu'un kart 1, de type trike, motorisé, est susceptible d'être adapté, grâce à sa modularité, à tout type de terrain, enneigée ou non.

Grâce au kit de motorisation selon l'invention, un kart 1, de type trike, initialement sans moteur, peut, à la fois, être aisément motorisé, tout en gagnant en modularité d'usage.

## Revendications

1. Kit de motorisation pour kart (1), de type trike, comportant un châssis (2) en forme de cadre comprenant deux longerons (3, 4) reliés par une traverse (5) au niveau de leur extrémité arrière (6), ces longerons (3, 4) rejoignant, dans la partie avant (7) du châssis (2), un tube de direction (8) traversé par un tube de fourche (9) dont l'extrémité inférieure est solidaire d'une fourche (10) recevant une roue directrice (11), sur l'extrémité supérieure du tube de fourche (9) étant monté un guidon (12), le châssis (2) reposant, dans sa partie arrière (15), sur un essieu fixe (17), le kit de motorisation (M) comportant un châssis auxiliaire (31) pourvu de moyens (32) pour sa fixation sur la partie arrière (33) du kart (1), le châssis auxiliaire (31) reposant au travers de paliers (16A) sur un essieu sous forme d'un arbre d'entraînement (17A) dont les extrémités (18A, 19A) sont conçues pour recevoir, selon le cas, des roues (20) ou des barbotins (29), sur ce châssis auxiliaire (31) reposant par des moyens de fixation adaptés un moteur (37) relié audit arbre d'entraînement (17A) par des moyens de transmission, **caractérisé en ce que** les moyens de fixation (32) sont définis par au moins une pièce de jonction (39) conçue pour enserrer, simultanément, l'essieu fixe (17) du kart (1), la traverse (5), reliant à leur extrémité arrière (6) les longerons (3, 4) du châssis (2) de ce kart (1), et une traverse avant (35) du châssis auxiliaire (31) du kit de motorisation (M).

2. Kit de motorisation selon la revendication 1, **caractérisé en ce que** la pièce de jonction (39) est composée de deux mâchoires (40, 41) comportant chacune des logements (42, 43, 44) conçus pour enserrer, respectivement l'essieu fixe (17), la traverse (5) et la traverse avant (35), ces deux mâchoires (40, 41) étant resserrées l'une sur l'autre grâce à des moyens de serrage.

3. Kit de motorisation selon la revendication 1 ou 2, **caractérisé en ce que** les moyens de fixation (32) sont complétés par au moins un bras de liaison (45) conçu pour relier au châssis (2) du kart (1) au moins un longeron latéral (34) que comporte le châssis auxiliaire (31).

4. Kit de motorisation selon la revendication 3, **caractérisé en ce que** le bras de liaison (45) est défini par un amortisseur à ressort (50).

5. Kit de motorisation selon l'une des revendications 1 à 4, **caractérisé en ce que** le châssis auxiliaire (31) comporte deux longerons latéraux (34), la traverse avant (35), sur l'extrémité arrière (51), opposée à ladite traverse avant (35), étant montée une barre de pare-chocs (52).

6. Kart (1), de type trike, équipé d'un kit de motorisation (M) selon l'une quelconque des 1 à 5 et comportant un châssis (2) en forme de cadre comprenant deux longerons (3, 4) reliés par une traverse (5) au niveau de leur extrémité arrière (6), ces longerons (3, 4) rejoignant, dans la partie avant (7) du châssis (2), un tube de direction (8) traversé par un tube de fourche (9) dont l'extrémité inférieure est solidaire d'une fourche (10) recevant une roue directrice (11), sur l'extrémité supérieure du tube de fourche (9) étant monté un guidon (12), le châssis (2) reposant, dans sa partie arrière (15), sur un essieu fixe (17) comportant des parties d'extrémité d'axe (18, 19) s'étendant de part et d'autre du châssis (2) du kart (1), dans lequel sur les extrémités (18A, 19A) de l'essieu sous forme d'un arbre d'entraînement (17A) du kit de motorisation (M) sont montées des roues (20).

7. Kart (1), de type trike, selon la revendication 6, **caractérisé en ce qu'**au-dessus des roues (20) s'étendent des garde-boue (53) fixés au moins en partie et de manière démontable sur les parties d'extrémité d'axe (18, 19) de l'essieu fixe (17).

8. Kart (1), de type trike, équipé d'un kit de motorisation (M) selon l'une quelconque des revendications 1 à 5 et comportant un châssis (2) en forme de cadre comprenant deux longerons (3, 4) reliés par une traverse (5) au niveau de leur extrémité arrière (6), ces longerons (3, 4) rejoignant, dans la partie avant (7) du châssis (2), un tube de direction (8) traversé par un tube de fourche (9) dont l'extrémité inférieure est solidaire d'une fourche (10) recevant une roue directrice (11), sur l'extrémité supérieure du tube de fourche (9) étant monté un guidon (12), le châssis (2) reposant, dans sa partie arrière (15), sur un essieu fixe (17) comportant des parties d'extrémité d'axe (18, 19) s'étendant de part et d'autre du châssis (2) du kart (1), dans lequel sur les extrémités (18A, 19A) de l'essieu sous forme d'un arbre d'entraînement (17A) du kit de motorisation (M) sont montées des barbotins (29), sur les parties d'extrémités d'axe (18, 19) de l'essieu fixe (17) de part et d'autre du châssis (2) sont montés des rouleaux de renvoi (27), sur chaque couple, rouleau de renvoi (27) - barbotin (29), de part et d'autre du châssis (2), étant monté une chenille (30) en venant s'enrouler partiellement autour du rouleau de renvoi (27) et du barbotin (29) dudit couple.

9. Kart (1), de type trike, selon la revendication 8, **caractérisé en ce qu'**au-dessus des chenilles (30) s'étendent des garde-boue (53A).

## Patentansprüche

1. Motorisierungssatz für ein Kart (1) vom Typ Trike, mit einem rahmenförmigen Fahrgestell (2), umfassend zwei Längsträger (3, 4), die an ihrem hinteren Ende (6) durch einen Querträger (5) verbunden sind, wobei die Längsträger (3, 4) im vorderen Teil (7) des Fahrgestells (2) mit einem Lenkrohr (8) verbunden sind, das von einem Gabelrohr (9) durchquert wird, dessen unteres Ende fest mit einer Gabel (10) verbunden ist, die ein Lenkrad (11) aufnimmt, wobei am oberen Ende des Gabelrohrs (9) ein Lenker (12) angebracht ist, wobei das Fahrgestell (2) in seinem hinteren Teil (15) auf einer festen Achse (17) aufliegt, wobei der Motorisierungssatz (M) ein Hilfsfahrgestell (31) umfasst, das mit Mitteln (32) zu seinem Befestigen am hinteren Teil (33) des Karts (1) versehen ist, wobei das Hilfsfahrgestell (31) über Lager (16A) auf einer Achse in Form einer Antriebswelle (17A) aufliegt, deren Enden (18A, 19A) ausgelegt sind, um, je nach Fall, Räder (20) oder Kettenräder (29) aufzunehmen, wobei auf diesem Hilfsfahrgestell (31) durch geeignete Befestigungsmittel ein Motor (37) aufliegt, der über Antriebsmittel mit der Antriebswelle (17A) verbunden ist,
**dadurch gekennzeichnet, dass** die Befestigungsmittel (32) durch mindestens ein Verbindungsteil (39) definiert sind, das ausgelegt ist, um gleichzeitig die feste Achse (17) des Karts (1), den Querträger (5), der an seinem hinteren Ende (6) die Längsträger (3, 4) des Fahrgestells (2) dieses Karts (1) verbindet, und einen vorderen Querträger (35) des Hilfsfahrgestells (31) des Motorisierungssatzes (M) einzuspannen.

2. Motorisierungssatz nach Anspruch 1, **dadurch gekennzeichnet, dass** das Verbindungsteil (39) aus zwei Backen (40, 41) mit jeweils Aufnahmen (42, 43, 44) besteht, die ausgelegt sind, um jeweils die feste Achse (17), den Querträger (5) und den vorderen Querträger (35) einzuspannen, wobei die beiden Backen (40, 41) mittels Spannmitteln aneinander festgezogen werden.

3. Motorisierungssatz nach Anspruch 1 oder 2,
**dadurch gekennzeichnet, dass** die Befestigungsmittel (32) durch mindestens einen Verbindungsarm (45) ergänzt werden, der ausgelegt ist, um mindestens einen seitlichen Längsträger (34), den das Hilfsfahrgestell (31) aufweist, mit dem Fahrgestell (2) des Karts (1) zu verbinden.

4. Motorisierungssatz nach Anspruch 3, **dadurch gekennzeichnet, dass** der Verbindungsarm (45) durch einen Federdämpfer (50) definiert ist.

5. Motorisierungssatz nach einem der Ansprüche 1 bis 4,
**dadurch gekennzeichnet, dass** das Hilfsfahrgestell (31) zwei seitliche Längsträger (34), den vorderen Querträger (35) aufweist, wobei an dem hinteren Ende (51), das dem vorderen Querträger (35) gegenüberliegt, eine Stoßstange (52) angebracht ist.

6. Kart (1) vom Typ Trike, ausgestattet mit einem Motorisierungssatz (M) nach einem der Ansprüche 1 bis 5 und mit einem rahmenförmigen Fahrgestell (2), umfassend zwei Längsträger (3, 4), die an ihrem hinteren Ende (6) durch einen Querträger (5) verbunden sind, wobei diese Längsträger (3, 4) im vorderen Teil (7) des Fahrgestells (2) mit einem Lenkrohr (8) verbunden sind, das von einem Gabelrohr (9) durchquert wird, dessen unteres Ende fest mit einer Gabel (10) verbunden ist, die ein Lenkrad (11) aufnimmt, wobei am oberen Ende des Gabelrohrs (9) ein Lenker (12) angebracht ist, wobei das Fahrgestell (2) in seinem hinteren Teil (15) auf einer festen Achse (17) mit Achsenden (18, 19) aufliegt, die sich auf beiden Seiten des Fahrgestells (2) des Karts (1) erstrecken, wobei an den Enden (18A, 19A) der Achse in Form einer Antriebswelle (17A) des Motorisierungssatzes (M) Räder (20) angebracht sind.

7. Kart (1) vom Typ Trike nach Anspruch 6, **dadurch gekennzeichnet, dass** sich über den Rädern (20) Kotflügel (53) erstrecken, die mindestens teilweise und abnehmbar an den Achsenden (18, 19) der festen Achse befestigt sind (17).

8. Kart (1) vom Typ Trike, ausgestattet mit einem Motorisierungssatz (M) nach einem der Ansprüche 1 bis 5 und mit einem rahmenförmigen Fahrgestell (2), umfassend zwei Längsträger (3, 4), die an ihrem hinteren Ende (6) durch einen Querträger (5) verbunden sind, wobei diese Längsträger (3, 4) im vorderen Teil (7) des Fahrgestells (2) mit einem Lenkrohr (8) verbunden sind, das von einem Gabelrohr (9) durchquert wird, dessen unteres Ende fest mit einer Gabel (10) verbunden ist, die ein Lenkrad (11) aufnimmt, wobei am oberen Ende des Gabelrohrs (9) ein Lenker (12) angebracht ist, wobei das Fahrgestell (2) in seinem hinteren Teil (15) auf einer festen Achse (17) mit Achsenden (18, 19) aufliegt, die sich auf beiden Seiten des Fahrgestells (2) des Karts (1) erstrecken, wobei an den Enden (18A, 19A) der Achse in Form einer Antriebswelle (17A) des Motorisierungssatzes (M) Kettenräder (29) angebracht sind, an den Achsenden (18, 19) der festen Achse (17) auf beiden Seiten des Fahrgestells (2) Umlenkrollen (27) angebracht sind, wobei an jedem Paar Umlenkrollen (27) und Kettenrad (29) auf beiden Seiten des Fahrgestells (2) eine Raupe (30) angebracht ist, die sich teilweise um die Umlenkrolle (27) und das Kettenrad (29) des Paares wickelt.

9. Kart (1), vom Typ Trike, nach Anspruch 8,
**dadurch gekennzeichnet, dass** sich über den Raupen (30) Kotflügel (53A) erstrecken.

## Claims

1. Motorization kit for a kart (1), of the trike type, comprising a frame-like chassis (2) having two longitudinal members (3, 4) connected by a crossmember (5) at the rear end (6) thereof, these longitudinal members (3, 4) joining, in the front part (7) of the chassis (2), a steering tube (8) traversed by a fork tube (9), the lower end of which is integral with a fork (10) receiving a steerable wheel (11), a handlebar (12) being mounted on the upper end of the fork tube (9), the rear part (15) of the chassis (2) resting on a fixed axle (17), the motorization kit (M) comprising an auxiliary chassis (31) provided with means (32) for fastening to the rear part (33) of the kart (1), the auxiliary chassis (31) resting via bearings (16A) on an axle in the form of a drive shaft (17A) the ends (18A, 19A) of which are designed to receive, as required, wheels (20) or sprockets (29), a motor (37) resting on this auxiliary chassis (31) by suitable fastening means and being connected to said drive shaft (17A) by transmission means, **characterized in that** the fastening means (32) are defined by at least one connection piece (39) designed to clamp, simultaneously, the fixed axle (17) of the kart (1), the crossmember (5), connecting at the rear end (6) thereof the longitudinal members (3, 4) of the chassis (2) of this kart (1), and a front crossmember (35) of the auxiliary chassis (31) of the motorization kit (M).

2. Motorization kit according to claim 1, **characterized in that** the connection piece (39) is composed of two jaws (40, 41) each comprising housings (42, 43, 44) designed to clamp, respectively, the fixed axle (17), the crossmember (5) and the front crossmember (35), these two jaws (40, 41) being tensioned together by clamping means.

3. Motorization kit according to either claim 1 or claim 2, **characterized in that** the fastening means (32) are supplemented by at least one connecting arm (45) designed to connect at least one side member (34) having the auxiliary chassis (31) to the chassis (2) of the kart (1).

4. Motorization kit according to claim 3, **characterized in that** the connecting arm (45) is defined by a spring damper (50).

5. Motorization kit according to any of claims 1 to 4, **characterized in that** the auxiliary chassis (31) comprises two side members (34) and the front cross member (35), a bumper bar (52) being mounted on the rear end (51) opposite said front cross member (35).

6. Kart (1), of the trike type, equipped with a motorization kit (M) according to any of claims 1 to 5 and comprising a frame-like chassis (2) having two longitudinal members (3, 4) connected by a cross member (5) at the rear end (6) thereof, these longitudinal members (3, 4) joining, in the front part (7) of the chassis (2), a steering tube (8) traversed by a fork tube (9), the lower end of which is integral with a fork (10) receiving a steerable wheel (11), a handlebar (12) being mounted on the upper end of the fork tube (9), the rear part (15) of the chassis (2) resting on a fixed axle (17) having axle end parts (18, 19) extending on either side of the chassis (2) of the kart (1), wherein wheels are mounted on the axle ends (18A, 19A) in the form of a drive shaft (17A) of the motorization kit (M) (20).

7. Kart (1), of the trike type, according to claim 6, **characterized in that** mudguards (53) extend above the wheels (20) and are at least partially and removably fastened to the axle end parts (18, 19) of the fixed axle (17).

8. Kart (1), of the trike type, equipped with a motorization kit (M) according to any of claims 1 to 5 and comprising a frame-like chassis (2) having two longitudinal members (3, 4) connected by a cross member (5) at the rear end (6) thereof, these longitudinal members (3, 4) joining, in the front part (7) of the chassis (2), a steering tube (8) traversed by a fork tube (9), the lower end of which is integral with a fork (10) receiving a steerable wheel (11), a handlebar (12) being mounted on the upper end of the fork tube (9), the rear part (15) of the chassis (2) resting on a fixed axle (17) having axle end parts (18, 19) extending on either side of the chassis (2) of the kart (1), wherein sprockets (29) are mounted on the axle ends (18A, 19A) in the form of a drive shaft (17A) of the motorization kit (M), and deflection rollers (27) are mounted on the axle end parts (18, 19) of the fixed axle (17) on either side of the chassis (2), a track (30) being mounted on each pair of deflection roller (27) and sprocket (29) on either side of the chassis (2), which track partially winds around the deflection roller (27) and sprocket (29) of said pair.

9. Kart (1), of the trike type, according to claim 8, **characterized in that** mudguards (53A) extend above the tracks (30).
